# EUROPÄISCHE PATENTSCHRIFT

(11) **EP 1 728 435 B1**
(45) Veröffentlichungstag und Bekanntmachung des Hinweises auf die Patenterteilung: **11.04.2012**
(21) Anmeldenummer: 06010934.5
(22) Anmeldetag: 26.05.2006
(51) Int. Cl.: A23G 3/02, A23G 3/12, A23G 1/20, A23G 3/20, A23G 3/00, A23G 3/06

(54) **Verfahren und Vorrichtung zum Ausformen eines Produktteppichs aus viskoser Süßwarenmasse**
Process and device for forming a bed of viscous confectionery mass
Procédé et dispositif pour former un lit de produit à base de masse sucrée visqueuse

(30) Priorität: 30.05.2005 DE 102005024701
(43) Veröffentlichungstag der Anmeldung: 06.12.2006
(73) Patentinhaber: Sollich KG, 32105 Bad Salzuflen (DE)
(72) Erfinder: Sollich, Thomas, 32689 Kalletal (DE)
(74) Vertreter: Rehberg Hüppe + Partner

(56) Entgegenhaltungen:
- US-A- 1 552 570
- US-A- 2 960 045
- US-A- 6 001 403

## Beschreibung

Die Erfindung betrifft ein Verfahren zum Ausformen eines Produktteppichs aus viskoser Süßwarenmasse, indem die Süßwarenmasse auf ein horizontal ausgerichtetes angetriebenes Förderband entsprechend der gewünschten Arbeitsbreite ausgebracht und durch Seitenwände an einem seitlichen Verlaufen gehindert wird, worauf der ausgebrachte Produktteppich unter Verfestigung der Süßwarenmasse gekühlt und einer Weiterverarbeitung zugeführt wird. Gleichzeitig wird eine Vorrichtung zum Ausformen eines Produktteppichs aus viskoser Süßwarenmasse auf ein horizontal ausgerichtetes angetriebenes Förderband beschrieben, mit einer Station zum Ausbringen der Süßwarenmasse auf das Förderband entsprechend der gewünschten Arbeitsbreite und mit Seitenwänden, die die auf das Förderband ausgebrachte Süßwarenmasse an einem seitlichen Verlaufen hindern. Es geht also um das Ausformen eines Produktteppichs aus einer flüssigen oder gering viskosen Süßwarenmasse, z. B. aus Schokolade oder Gelee oder aus anderen Fett- oder Zuckermassen. Eine solche Süßwarenmasse befindet sich also in fließfähigem Zustand, wenn sie auf das angetriebene Förderband ausgebracht wird.

Das Ausbringen einer solchen flüssigen oder gering viskosen Süßwarenmasse kann durch Gießen, durch Extrudieren, durch Walzenformung oder mit Düsen geschehen. Beim Ausbringen einer solchen flüssigen oder gering viskosen Süßwarenmasse in einer gewünschten Schichtdicke von mehreren Millimetern oder Zentimetern auf ein angetriebenes, horizontal ausgerichtetes endloses Förderband besteht die Gefahr, dass die Süßwarenmasse auf dem Förderband entsprechend ihrer jeweiligen Viskosität mehr oder weniger weit auseinanderläuft bzw. sogar über die seitlichen Kanten des Förderbandes übertritt. Dies bedeutet nicht nur, dass die gewünschte Schichtdicke nicht eingehalten wird, sondern zieht auch eine Produktionsunterbrechung mit nachfolgender Reinigung der Vorrichtung nach sich. Darüber hinaus ist es schwierig bzw. in manchen Fällen unmöglich, eine gleich bleibende Schichtdicke über die Arbeitsbreite einzuhalten. Das Auseinanderlaufen der Süßwarenmasse wird vielfach erst durch eine Abkühlung der Süßwarenmasse beendet, bei der die Viskosität entsprechend angestiegen ist.

### STAND DER TECHNIK

Um der aufgezeigten Problematik entgegenzuwirken, ist es bekannt, einem angetriebenen, horizontal ausgerichteten endlosen Förderband ortsfest angeordnete Seitenschienen zuzuordnen. Die Seitenschienen bestehen in vielen Fällen aus Kunststoff, erstrecken sich im Wesentlichen in vertikaler Richtung und sind in den Randbereichen des Förderbandes über diesem angeordnet. Allerdings ergibt sich zwischen der Oberfläche des Förderbandes und den Seitenschienen je ein Spalt. Durch diesen Spalt können kleinere Mengen der Süßwarenmasse nach außen durchtreten und sich auf dem Förderband aufbauen. Weiterhin ist nachteilig, dass die meisten gering viskosen Massen klebrig sind und somit an den ortsfesten Seitenschienen anhaften. Durch unregelmäßige Abreißvorgänge fransen sie Ränder des Produktteppichs aus, d. h. die Formgebung des Produktteppichs im Randbereich ist unbefriedigend.

Es ist auch bereits versucht worden, anstelle der ortsfesten Seitenschienen mitlaufende Seitenbänder einzusetzen. Dabei handelt es sich um relativ schmale senkrecht stehende Bänder, die allerdings synchron mit dem Förderband angetrieben werden müssen. Dadurch werden die Seitenkanten des Produktteppichs schonender geführt und weniger beschädigt und ausgefranst. Allerdings benötigt jedes der beiden Seitenbänder einen eigenen Antrieb, der synchron gesteuert bzw. geregelt werden muss. Der maschinelle Aufwand ist erheblich. Aber auch hier ergibt sich ein Spalt zwischen der Oberfläche des Förderbandes und den Seitenbändern, durch den Süßwarenmasse hindurchtreten kann.

Aus der US 1,552,570 ist ein Verfahren zum Ausformen eines Produktteppichs aus einer viskosen Süßwarenmasse bekannt, indem die Süßwarenmasse auf ein horizontal ausgerichtetes angetriebenes Förderband entsprechend einer gewünschten Arbeitsbreite ausgebracht und durch Seitenwände an einem seitlichen Verlaufen gehindert wird, worauf der ausgebrachte Produktteppich unter Verfestigung der Süßwarenmasse gekühlt und einer Weiterverarbeitung zugeführt wird. Die Ausbringung der plastischen, heißen, zähen und klebrigen Süßwarenmasse geschieht mit Hilfe eines Ausgusses und einem nachgeschalteten einstellbaren Abstreicher, die sich nahezu über die gesamte Breite des Förderbandes erstrecken. Die Masse wird nach dem Ausbringen auf das Förderband durch eine Reihe von Walzen kalibriert. Es sind Seitenwände vorhanden, die die Arbeitsbreite begrenzen, unabhängig davon bis wann eine hinreichende Verfestigung der Süßwarenmasse eingetreten ist. Die Seitenwände werden von einander überlappenden, ortsfest mit den Rändern des Förderbandes verbundenen und davon rechtwinklig abstehenden einzelnen Platten gebildet. Die Platten verbleiben beim Umlauf des Förderbandes in vertikalen Ebenen. Die Ränder des Förderbandes verbleiben beim Umlauf des Förderbandes im Wesentlichen in horizontalen Ebenen. Ein Hochklappen der Ränder des angetriebenen Förderbandes findet also nicht statt. Allerdings werden die Platten beim Umlauf des Förderbandes um Führungswalzen zwischen dem oberen und unteren Trum des Förderbandes bzw. umgekehrt um 180° um die Achsen der Führungswalzen gedreht.

Aus der US-A- 6,001,403 ist ein Verfahren und eine Vorrichtung zur Herstellung eines kernhaltigen Nahrungsmittels in Riegelform bekannt. Der Kern des Nahrungsmittels besteht aus einer gestaltstabil extrudierbaren Masse, z. B. einer Paste aus Bohnen, während das Hüllmaterial aus einer klebrigen Reismasse, einem Brotteig oder dergleichen bestehen kann. Zur Umhüllung des Kerns mit dem Hüllmaterial wird ein speziell ausgebildetes Förder- und Formungsband eingesetzt, das ein schmales, in Förderrichtung durchgehendes Futterband aufweist, auf dem eine Vielzahl einzelner, einander in Förderrichtung überlappend angeordneter Bandteile so angeordnet sind, dass die Bandteile unabhängig voneinander angehoben werden können. Damit ist es möglich, die einzelnen Bandteile rinnenförmig zu verformen und dabei das Hüllmaterial um den gestaltstabilen Kern zu legen. Es werden dabei mehrere angetriebene Kompressionsformungselemente wiederholt vor- und zurückbewegt, so dass das Hüllmaterial intermittierend so viele Male wie erforderlich zusammengedrückt wird. Für flüssige oder gering viskose Massen ist diese Vorrichtung nicht geeignet, weil solche Massen durch die Spalte zwischen den einzelnen Bandteilen hindurchtreten können, so dass die Gefahr einer entsprechenden Verschmutzung sowie von fortwährenden Betriebsunterbrechungen besteht.

Die US-A-2,960,045 zeigt ein Verfahren und eine Vorrichtung zum Umformen eines gebackenen Teigs in eine Schlauch- oder Rohrform ähnlich zur Herstellung einer so genannten Roulade. Diese kann auch mit einer Füllmasse gefüllt werden. Durch Längsschneiden wird ein entsprechend breites Band eines gebackenen Teigs auf ein Förderband aufgelegt und gegebenenfalls mit einer Heizeinrichtung noch zusätzlich erwärmt, um die Verformbarkeit des an sich festen Körpers herbeizuführen. Anschließend wird mit Hilfe verschiedener Leitwalzen das gesamte Förderband in einen U-förmigen Zustand überführt und nachfolgend durch ein Formrohr gezogen, so dass sowohl das gesamte Förderband wie auch der Streifen aus dem gebackenen Teig in eine Schlauch- oder Rohrform überführt werden. In diesem Zustand erfolgt eine Kühlung, bis die Verformbarkeit des gebackenen Teigs sich wiederum so erniedrigt hat, dass die Schlauch- oder Rohrform des rouladenähnlichen Produkts beibehalten bleibt. Bei diesem bekannten Verfahren besteht keine Gefahr, dass der gebackene Teig seitlich verläuft. Er ist vielmehr so gestaltstabil, dass er aus einer ebenen Gestalt in eine gekrümmte Gestalt überführt werden kann, ohne dass sich dabei irgendwelche Teile des gebackenen Teigs seitlich hinwegbewegen könnten.

### AUFGABE DER ERFINDUNG

Der Erfindung liegt die Aufgabe zugrunde, ein Verfahren und eine Vorrichtung aufzuzeigen, mit denen mit relativ einfachen Mitteln auf einem horizontal ausgerichteten angetriebenen endlosen Förderband eine Süßwarenmasse zu einem Produktteppich mit über die Arbeitsbreite hinreichend konstanter Schichtdicke ausgebracht werden kann, ohne dass dabei die oben beschriebenen Nachteile auftreten.

### LÖSUNG

Die Aufgabe der Erfindung wird erfindungsgemäß mit den Merkmalen der unabhängigen Patentansprüche gelöst.

### BESCHREIBUNG DER ERFINDUNG

Die Erfindung geht von dem Gedanken aus, die Ränder des Förderbandes um Achsen in Längsrichtung des Förderbandes so hochzuklappen, dass ein im Querschnitt U-förmiger Trog oder eine Rinne entsteht, in den die viskose Süßwarenmasse ausgebracht wird. Das seitliche Verlaufen der Süßwarenmasse wird damit gezielt begrenzt. Spalte, durch die ein Teil der Süßwarenmasse nach außen hindurchtreten könnte, werden vermieden. Der U-förmige Trog mit den hochgeklappten Rändern des Förderbandes wird nur bereichsweise gebildet, und zwar solange bis durch eine Abkühlung eine hinreichende Verfestigung der viskosen Süßwarenmasse eingetreten ist. Die Abkühlung kann auch durch Einsatz eines Kühlkanals erfolgen. Der Bereich, in dem die Ränder des Förderbandes um etwa 90° hochgeklappt und in hochgeklapptem Zustand mitbewegt werden, hat einen festliegenden Anfang und ein definiertes Ende. Der Anfang ist relativ zu einer Station zum Ausbringen der Süßwarenmasse angeordnet. Es kann vor oder nach dieser Station angeordnet sein. Das definierte Ende ermöglicht ein kontinuierliches Ablösen der Ränder des Förderbandes von den vertikalen Seitenwänden des verfestigten Produktteppichs. Die Seitenwände erscheinen vergleichsweise weniger ausgefranst und somit hinreichend glatt.

Es ist möglich, die Süßwarenmasse zunächst in einer geringeren Breite, als es der Arbeitsbreite entspricht, auf das flachliegende Förderband auszubringen, dann die Ränder des angetriebenen Förderbandes um etwa 90° hochzuklappen und das Verlaufen der Süßwarenmasse zu nutzen. Die Ränder werden in hochgeklapptem Zustand so lange mitbewegt, bis eine hinreichende Verfestigung der Süßwarenmasse eingetreten ist. Es ist aber auch möglich, dass das Hochklappen der Ränder des angetriebenen Förderbandes vor dem Ausbringen der Süßwarenmasse auf das Förderband erfolgt.

Das gezielte Verlaufen oder zumindest das Einebnen und Erreichen einer konstanten Schichtdicke über die durch den Trog festgelegte Arbeitsbreite und damit die Breite des Produktteppichs kann dadurch unterstützt werden, indem das Förderband nach dem Ausbringen der Süßwarenmasse gerüttelt wird.

Eine zur Durchführung des Verfahrens geeignete Vorrichtung zum Ausformen eines Produktteppichs aus viskoser Süßwarenmasse auf ein horizontal ausgerichtetes angetriebenes Förderband, arbeitet mit einer Station zum Ausbringen der Süßwarenmasse auf das Förderband entsprechend der gewünschten Arbeitsbreite und mit Seitenwänden, die die auf das Förderband ausgebrachte Süßwarenmasse an einem seitlichen Verlaufen hindern. Die Seitenwände werden von den hochgeklappten Rändern des Förderbandes gebildet. Das horizontal ausgerichtete angetriebene Förderband ist zumindest in seinen beiden Randbereichen so elastisch-nachgiebig ausgebildet, dass die Ränder während des Umlaufs des Förderbandes bereichsweise hochklappbar sind. Zum bereichsweisen Hochklappen der Ränder des Förderbandes sind Leitelemente vorgesehen.

Als Leitelemente können ortsfeste Schienen, mitlaufende Führungsbänder, Rollenbahnen oder dgl. vorgesehen sein. Auch andere Leitelemente sind denkbar. Die Leitelemente kommen mit der Süßwarenmasse nicht in Kontakt, sondern bewirken nur das Hochklappen der Ränder des Förderbandes in dem gewünschten Bereich.

Das Förderband kann ein- oder beidseitig in Längsrichtung durchgehende Einkerbungen aufweisen, die die Biegestellen darstellen, an denen die Ränder des Förderbandes gegenüber einem Mittelteil hochgeklappt werden. Mit und ohne Einkerbungen kann das Förderband doppellagig ausgebildet sein und eine außen liegende Schicht aus Kunststoff und eine innen liegende Schicht aus einem Gewebe aufweisen.

Der Station zum Ausbringen der Süßwarenmasse auf das Förderband kann ein Kühlkanal nachgeordnet sein. Die Leitelemente können den Kühlkanal durchsetzend angeordnet sein.

Die Leitelemente können Anlaufschrägen aufweisen oder bilden, so dass die Ränder des Förderbandes bei dessen Umlauf schonend und allmählich hochgeklappt werden.

Schließlich kann unter dem Förderband eine Rütteleinrichtung vorgesehen sein. Die Rütteleinrichtung kann als Rüttelplatte, wie bei einer Überziehmaschine ausgebildet und unmittelbar unterhalb des oberen Trums des Förderbandes angeordnet sein.

Vorteilhafte Weiterbildungen der Erfindung ergeben sich aus den abhängigen Patentansprüchen und der gesamten Beschreibung. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche abweichend von den gewählten Rückbeziehungen ist ebenfalls möglich und wird hiermit angeregt. Dies betrifft auch solche Merkmale, die in separaten Zeichnungsfiguren dargestellt sind oder bei deren Beschreibung genannt werden. Diese Merkmale können auch mit Merkmalen unterschiedlicher Patentansprüche kombiniert werden.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine schematisierte Seitenansicht einer Vorrichtung zum Ausformen eines Produktteppichs aus viskoser Süßwarenmasse.
- **Fig. 2**: zeigt einen Schnitt gemäß der Linie II-II in Fig. 1.
- **Fig. 3**: zeigt einen Schnitt gemäß der Linie III-III in Fig. 1.
- **Fig.4**: zeigt eine vergrößernde Darstellung des Beginns des Bereiches, in dem die Ränder des Förderbandes mit einer Rollenbahn hochgeklappt werden.

### FIGURENBESCHREIBUNG

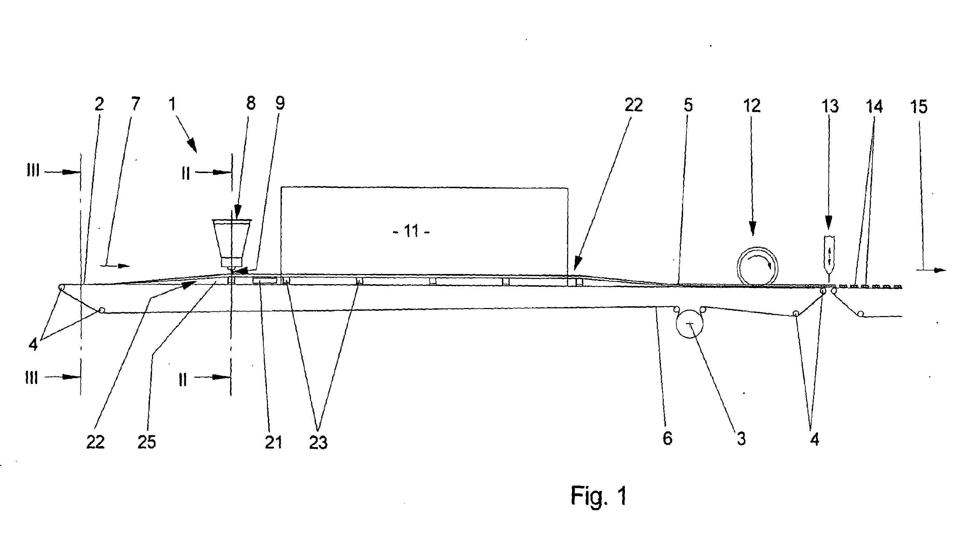

**Fig. 1** zeigt eine Ausführungsform der Vorrichtung 1, die zur Durchführung des Verfahrens geeignet ist. Wesentliches Element der Vorrichtung ist ein Förderband 2, das horizontal ausgerichtet angeordnet ist. Das Förderband 2 ist über eine Antriebsrolle 3 und über Umlenkrollen 4 so geführt, das ein oberes Trum 5 und ein unteres Trum 6 entsteht. Das Förderband 2 wird in Richtung des Pfeils 7 umlaufend angetrieben.

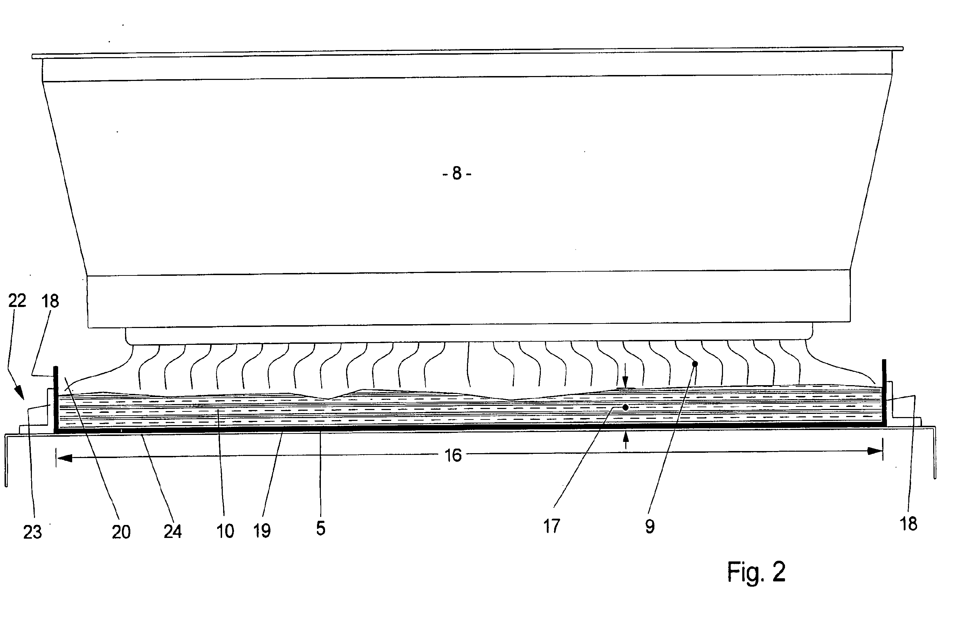

Im Anfangsbereich des oberen Trums 5 des Förderbandes 2 ist eine Station 8 zum Ausbringen einer Süßwarenmasse 9 auf das obere Trum 5 des Förderbandes 2 vorgesehen. Die Station 8 zum Ausbringen einer Süßwarenmasse 9 kann in verschiedener Weise realisiert werden, z. B. als Extruder, als Pump- und Dosiereinrichtung mit Düsen, als Gießkopf oder dergleichen. Die Süßwarenmasse 9 ist flüssig bis viskos und hat die Tendenz, auf dem oberen Trum 5 des Förderbandes 2 zu verlaufen. Aus der Süßwarenmasse 9 soll ein Produktteppich 10 (Fig. 2) entstehen, der formstabil verfestigt ist. Die Verfestigung wird in aller Regel durch Abkühlung der Süßwarenmasse 9 erreicht, insbesondere mittels eines Kühlkanals 11, durch den das Förderband 2 läuft. In der verfestigten Form wird der Produktteppich 10 dann zu Produkten weiterverarbeitet. Dies kann durch eine Längsschneidestation 12 und eine Querschneidestation 13 erreicht werden. Damit entstehen aus dem Produktteppich 10 einzelne Produkte 14, die in Richtung eines Pfeils 15 weitergefördert und beispielsweise einer Verpackungsanlage (nicht dargestellt) zugeführt werden.

Wie aus den Fig. 1 und 2 erkennbar ist, soll ein Produktteppich 10 entstehen, der eine festgelegte Arbeitsbreite 16 und eine über die Arbeitsbreite 16 konstante Schichtdicke 17 aufweist. Die gewünschte Schichtdicke 17 kann mehrere mm bis einige cm betragen. Fig. 2 lässt erkennen, dass sich die gewünschte konstante Schichtdicke 17 noch nicht eingestellt hat, weil Fig. 2 den Zustand der Süßwarenmasse 9 unmittelbar beim Ausbringen aus der Station 8 auf das Förderband 2 zeigt. Allerdings ist das Förderband 2 in seinen beiden Randbereichen so ausgebildet, dass Ränder 18 des Förderbandes 2 gegenüber einem Mittelteil 19 des Förderbandes 2 hochklappbar sind. Der Mittelteil 19 mit den beiden hochgeklappten Rändern 18 bildet einen im Querschnitt U-förmigen Trog 20 (Fig. 2), in den hinein die Süßwarenmasse 9 mit Hilfe der Station 8 ausgebracht wird. Die Erstreckung der Ränder 18 ist größer bemessen als die gewünschte Schichtdicke 17. Durch die hochgeklappten Ränder 18 wird die Süßwarenmasse 9 an einem weiteren seitlichen Verlaufen gehindert bzw. auf die gewünschte Arbeitsbreite 16 begrenzt. Kurz stromab der Station 8 zum Ausbringen der Süßwarenmasse 9 kann unter dem oberen Trum 5 des Förderbandes 2 eine Rütteleinrichtung 21 vorgesehen sein, die den Mittelteil 19 des Förderbandes 2 erfasst. Die Rütteleinrichtung 21 kann als Rüftelplatte ausgebildet sein.

Zum bereichsweisen Hochklappen der Ränder 18 des Förderbandes 2 sind Leitelemente 22 vorgesehen. Die Leitelemente 22 können ortsfest oder mitlaufend angetrieben angeordnet sein. In einer besonders einfachen Ausführungsform bestehen die Leitelemente 22 aus ortsfest angeordneten Schienen 23, die abständig (Fig. 1) am Rahmen oder Gestell des Förderbandes 2 befestigt sind. Fig. 2 lässt eine Tischplatte 24 als Bestandteil des Gestells des Förderbandes 2 erkennen, über die das obere Trum 5 des Förderbandes 2 gleitend abgestützt wird. Die Schienen 23 können mit dieser Tischplatte 24 verschraubt sein. Es ist aber auch möglich, statt oder zusätzlich zu abständig angeordneten Schienen 23 eine durchgehende Schiene vorzusehen, die sich über den Bereich erstreckt, in dem die Ränder 18 des Förderbandes 2 hochgeklappt werden sollen. Die Leitelemente 22 können auch aus mitlaufenden, vertikal ausgerichteten Deck- oder Führungsbändern (nicht dargestellt) bestehen. Die Leitelemente 22 weisen auf oder bilden vorteilhaft eine Anlaufschräge 25, damit die Ränder 18 des Förderbandes 2 während des Umlaufs des Förderbandes 2 allmählich hochgeklappt werden. Die Leitelemente 22 sind so ausgebildet und angeordnet, dass die Ränder 18 des Förderbandes 2 zumindest etwa in einem Winkel von 90° gegenüber dem Mittelteil 19 abstehen (Fig. 2), wenn die Verfestigung der Süßwarenmasse durch Abkühlung eintritt. Das Hochklappen der Ränder 18 des Förderbandes 2 kann relativ zu der Station 8 zum Ausbringen der Süßwarenmasse 9 so erfolgen, dass die hochgeklappte Stellung mit dem Trog 20 bereits kurz vor oder bei Erreichen der Station 8 eintritt. In diesem Fall wird die Süßwarenmasse 9 in den fertigen Trog 20 ausgebracht bzw. ausgegossen. Es ist aber auch möglich, die Süßwarenmasse 9 mit einer in ihrer Breite verringerten Station 8 auf den Mittelteil 19 des flachliegenden Förderbandes 2 auszubringen und das Hochklappen der Ränder 18 erst anschließend durchzuführen. Dabei ist das seitliche Verlaufen der Süßwarenmasse 9 auf die Anordnung der Leitelemente 22 abgestimmt. In beiden Fällen können sich die Leitelemente 22 auch durch den anschließenden Kühlkanal 11 hindurcherstrecken (Fig. 1).

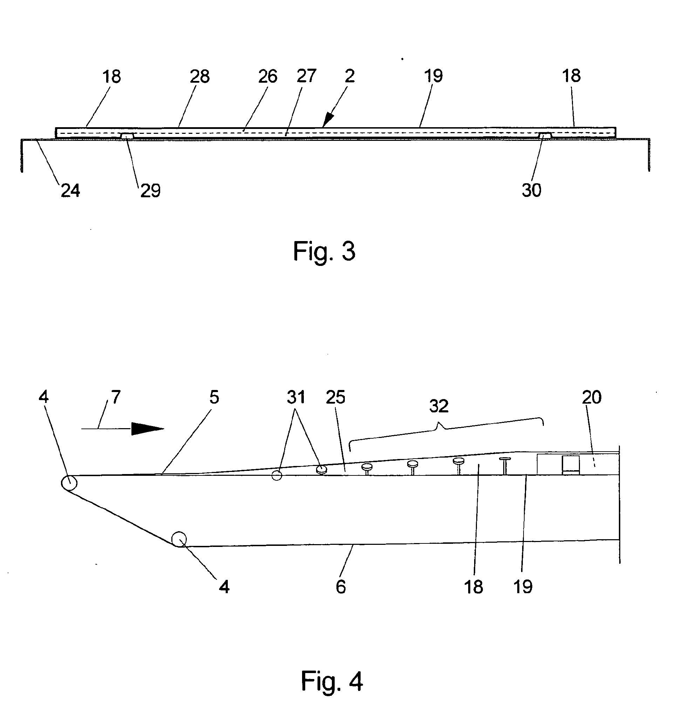

**Fig. 3** lässt erkennen, dass das Förderband 2 aus einer oberen Schicht 26 und einer unteren Schicht 27 bestehen kann. Die obere Schicht 26 kann aus einer Kunststoffbahn mit glatter Oberfläche 28 bestehen. Die untere Schicht 27 kann aus einer Gewebebahn bestehen. Die beiden Schichten 26 und 27 sind dauerhaft miteinander verbunden. Auf der Unterseite (und/oder auf der Oberseite) des Förderbandes 2 können in Längsrichtung durchgehende Einkerbungen 29 und 30 vorgesehen sein. Die Einkerbungen 29, 30 stellen die Übergangsstellen zwischen dem Mittelteil 19 und den Rändern 18 des Förderbandes 2 dar. Die Einkerbungen 29, 30 sind hier durch Unterbrechungen der unteren Schicht 27 gebildet, d. h. sie erstrecken sich etwa über die halbe Dicke des Förderbandes 2. Die Einkerbungen 29, 30 bilden Biege- oder Gelenkstellen, um die die Ränder 18 relativ zum Mittelteil 19 des Förderbandes 2 hoch- und in der Folge auch wieder niedergeklappt werden.

**Fig. 4** zeigt eine weitere Ausführungsform der Vorrichtung 1 im Anfangsbereich des oberen Trums 5 des Förderbandes 2. Die Leitelemente 22 bestehen hier aus einzelnen abständig und im Winkel unterschiedlich platzierten Rollen 31, die insgesamt eine Rollenbahn 32 bilden. Die Rollenbahn 32 bildet zunächst die Anlaufschräge 25 und dann den Trog 20 mit den hochgeklappten Rändern 18.

### BEZUGSZEICHENLISTE

- 1: Vorrichtung
- 2: Förderband
- 3: Antriebsrolle
- 4: Umlenkrolle
- 5: oberes Trum
- 6: unteres Trum
- 7: Pfeil
- 8: Station zum Ausbringen
- 9: Süßwarenmasse
- 10: Produktteppich

- 21: Rütteleinrichtung
- 22: Leitelement
- 23: Schiene
- 24: Tischplatte
- 25: Anlaufschräge
- 26: obere Schicht
- 27: untere Schicht
- 28: Oberfläche
- 29: Einkerbung
- 30: Einkerbung

- 11: Kühlkanal
- 12: Längsschneidestation
- 13: Querschneidestation
- 14: Produkt
- 15: Pfeil
- 16: Arbeitsbreite
- 17: Schichtdicke
- 18: Rand
- 19: Mittelteil
- 20: Trog

- 31: Rolle
- 32: Rollenbahn

## Patentansprüche

1. Verfahren zum Ausformen eines Produktteppichs (10) aus einer Süßwarenmasse (9) in fließfähigem Zustand, indem die Süßwarenmasse (9) in diesem fließfähigen Zustand auf ein horizontal ausgerichtetes angetriebenes Förderband (2) entsprechend einer gewünschten Arbeitsbreite (16) ausgebracht und durch Seitenwände an einem seitlichen Verlaufen gehindert wird, worauf der ausgebrachte Produktteppich (10) unter Verfestigung der Süßwarenmasse (9) gekühlt und einer Weiterverarbeitung zugeführt wird, **dadurch gekennzeichnet, dass** zur Bildung der das seitliche Verlaufen behindernden Seitenwände die Ränder (18) des angetriebenen Förderbandes (2) um etwa 90° um Achsen in Längsrichtung des Förderbandes hochgeklappt werden und in hochgeklapptem Zustand solange mitbewegt werden, bis eine hinreichende Verfestigung der Süßwarenmasse (9) eingetreten ist.

2. Verfahren nach Anspruch 1, **dadurch gekennzeichnet, dass** das Hochklappen der Ränder (18) des angetriebenen Förderbandes (2) vor dem Ausbringen der Süßwarenmasse (9) auf das Förderband (2) erfolgt.

3. Verfahren nach Anspruch 1 oder 2, **dadurch gekennzeichnet, dass** das Förderband (2) nach dem Ausbringen der Süßwarenmasse (9) gerüttelt wird.

4. Vorrichtung zum Ausformen eines Produktteppichs (10) aus einer Süßwarenmasse (9) in fließfähigem Zustand auf ein horizontal ausgerichtetes angetriebenes Förderband (2), mit einer Station (8) zum Ausbringen der Süßwarenmasse (9) auf das Förderband (2) entsprechend einer gewünschten Arbeitsbreite (16) und mit Seitenwänden, die die auf das Förderband (2) ausgebrachte Süßwarenmasse (9) an einem seitlichen Verlaufen hindern, **dadurch gekennzeichnet, dass** das horizontal ausgerichtete angetriebene Förderband (2) zumindest in seinen beiden Randbereichen so elastisch-nachgiebig ausgebildet ist, dass die Ränder (18) während des Umlaufs des Förderbandes (2) bereichsweise um Achsen in Längsrichtung des Förderbandes hochklappbar sind, und dass zum bereichsweisen Hochklappen der Ränder (18) des Förderbandes (2) Leitelemente (22) vorgesehen sind.

5. Vorrichtung nach Anspruch 4, **dadurch gekennzeichnet, dass** als Leitelemente (22) ortsfeste Schienen (23), mitlaufende Führungsbänder, Rollenbahnen (32) od. dgl. vorgesehen sind.

6. Vorrichtung nach Anspruch 4 oder 5, **dadurch gekennzeichnet, dass** das Förderband (2) in Längsrichtung durchgehende Einkerbungen (29, 30) aufweist, die die Biegestellen darstellen, an denen die Ränder (18) des Förderbandes (2) gegenüber einem Mittelteil (19) hochgeklappt werden.

7. Vorrichtung nach mindestens einem der Ansprüche 4 bis 6, **dadurch gekennzeichnet, dass** das Förderband (2) doppellagig ausgebildet ist und eine außen liegende Schicht (26) aus Kunststoff und eine innen liegende Schicht (27) aus einem Gewebe aufweist.

8. Vorrichtung nach mindestens einem der Ansprüche 4 bis 7, **dadurch gekennzeichnet, dass** der Station (8) zum Ausbringen der Süßwarenmasse (9) auf das Förderband (2) ein Kühlkanal (11) nachgeordnet ist, und dass die Leitelemente (22) den Kühlkanal (11) durchsetzend angeordnet sind.

9. Vorrichtung nach mindestens einem der Ansprüche 4 bis 8, **dadurch gekennzeichnet, dass** die Leitelemente (22) Anlaufschrägen (25) aufweisen.

10. Vorrichtung nach mindestens einem der Ansprüche 4 bis 9, **dadurch gekennzeichnet, dass** unter dem Förderband (2) eine Rütteleinrichtung (21) vorgesehen ist.

## Claims

1. A method for forming a product layer (10) of confectionary mass (9) in a flowable condition, by outputting the confectionary mass (9) in this flowable condition onto a horizontally located driven conveyor belt (2) to correspond to a desired working width (16) and to be prevented from subsiding in a lateral direction by sidewalls, the outputted product layer (10) then being cooled under solidification of the confectionary mass (9) and being supplied for further processing, **characterised in that** the edges (18) of the driven conveyor belt (2) are fold up by approximately 90° about axes extending in the longitudinal direction of the conveyor belt (2) to form the sidewalls preventing the confectionary mass (9) from subsiding in a lateral direction and the edges (18) in their fold up position are moved along until sufficient solidification of the confectionary mass (9) has occurred.

2. The method of claim 1, **characterised in that** folding up of the edges (18) of the driven conveyor belt (2) is realised before outputting the confectionary mass (9) onto the conveyor belt (2).

3. The method of claim 1 or 2, **characterised in that** the conveyor belt (2) is vibrated before outputting the confectionary mass (9).

4. An apparatus for forming a product layer (10) of a confectionary mass (9) in a flowable condition onto a horizontally arranged driven conveyor belt (2), including a station (8) for outputting the confectionary mass (9) onto the conveyor belt (2) to correspond to a desired working width (16), the conveyor belt (2) having sidewalls, the sidewalls preventing the confectionary mass (9) being output onto the conveyor belt (2) from subsiding in a lateral direction, **characterised in that** the horizontally arranged driven conveyor belt (2) at least in its two edge portions is designed to be resilient such that the edges (18) during rotation of the conveyor belt (2) can be folded up sectionwise about axes extending in the longitudinal direction of the conveyor belt (2) and that guiding elements (22) are provided for folding up the edges (18) of the conveyor belt (2) sectionwise.

5. The apparatus of claim 4, **characterised in that** stationary bars (23), guiding bands being moved therewith, roller conveyors (32) and the like are provided as guiding elements (22).

6. The apparatus of claim 4 or 5, **characterised in that** the conveyor belt (2) includes carvings (29, 30) being continuous in a longitudinal direction, the carvings (29, 30) representing the bending locations at which the edges (18) of the conveyor belt (2) are folded up with respect to a centre portion (19).

7. The apparatus of at least one of claims 4 to 6, **characterised in that** the conveyor belt (2) is designed to include two layers of which the outer layer (26) is made of plastic and the inner layer (27) is made of fabric.

8. The apparatus of at least one of claims 4 to 7, **characterised in that** a cooling channel (11) is arranged downstream of the station (8) for outputting the confectionary mass (9) onto the conveyor belt (2) and that the guiding elements (22) are arranged to protrude through the cooling channel (11).

9. The apparatus of at least one of claims 4 to 8, **characterised in that** the guiding elements (22) include inclined beginning portions (25).

10. The apparatus of at least one of claims 4 to 9, **characterised in that** a vibrating unit (21) is provided below the conveyor belt (2).

## Revendications

1. Procédé pour former une nappe de produit (10) à partir d'une pâte de confiserie (9) à l'état visqueux, en répartissant la pâte de confiserie (9) dans cet état visqueux conformément à une largeur de travail (16) souhaitée sur une bande transporteuse (2), actionnée et orientée horizontalement, et en l'empêchant de s'écouler par les côtés au moyen de parois latérales, puis la nappe de produit (10) déposée est refroidie en générant le durcissement de la pâte de confiserie (9) et est acheminée vers un traitement ultérieur, **caractérisé en ce que** pour former les parois latérales empêchant l'écoulement latéral, les bords (18) de la bande transporteuse (2) actionnée sont pliés vers le haut sur environ 90° autour des axes dans le sens longitudinal de la bande transporteuse (2) et, dans la position relevée, sont déplacés avec ladite bande (2) jusqu'à ce que la pâte de confiserie (9) soit suffisamment durcie.

2. Procédé selon la revendication 1, **caractérisé en ce que** les bords (18) de la bande transporteuse (2) actionnée sont pliés vers le haut avant que la pâte de confiserie (9) soit déposée sur la bande transporteuse (2).

3. Procédé selon la revendication 1 ou 2, **caractérisé en ce que** la bande transporteuse (2) est soumise à des vibrations après la pose de la pâte de confiserie (9).

4. Dispositif pour former une nappe de produit (10) à partir d'une pâte de confiserie (9) à l'état visqueux sur une bande transporteuse (2), actionnée et orientée horizontalement, ledit dispositif comportant un poste (8) pour répandre la pâte de confiserie (9) sur la bande transporteuse (2) conformément à une largeur de travail (16) souhaitée, et comportant des parois latérales qui empêchent que la pâte de confiserie (9) posée sur la bande transporteuse (2) s'écoule par les cotés, **caractérisé en ce que** la bande transporteuse (2), actionnée et orientée horizontalement est réalisée de manière élastiquement flexible au moins dans ses deux zones de bordure, de telle sorte que, pendant le défilement de la bande transporteuse (2), les bords (18) peuvent être pliés vers le haut dans certaines zones autour des axes dans le sens longitudinal de la bande transporteuse (2), et **en ce que** des éléments de guidage (22) sont prévus pour plier vers le haut les bords (18) de la bande transporteuse (2) dans certaines zones.

5. Dispositif selon la revendication 4, **caractérisé en ce que** les éléments de guidage (22) prévus sont des rails (23) fixes, des bandes de guidage entraînées, des transporteurs à rouleaux (32) ou tout élément similaire.

6. Dispositif selon la revendication 4 ou 5, **caractérisé en ce que** la bande transporteuse (2) comporte des encoches (29, 30) continues dans le sens longitudinal, qui constituent les zones de flexion au niveau desquelles les bords (18) de la bande transporteuse (2) peuvent être pliés vers le haut par rapport à une partie centrale (19).

7. Dispositif selon au moins l'une quelconque des revendications 4 à 6, **caractérisé en ce que** la bande transporteuse (2) est réalisée en deux couches, et comporte une couche extérieure (26) en matière plastique et une couche intérieure (27) en textile.

8. Dispositif selon au moins l'une quelconque des revendications 4 à 7, **caractérisé en ce qu'**un canal de refroidissement (11) est monté en aval du poste (8) destiné à répandre la pâte de confiserie (9) sur la bande transporteuse (2), et **en ce que** les éléments de guidage (22) sont agencés de manière à passer dans le canal de refroidissement (11).

9. Dispositif selon au moins l'une quelconque des revendications 4 à 8, **caractérisé en ce que** les éléments de guidage (22) comportent des rampes d'introduction (25).

10. Dispositif selon au moins l'une quelconque des revendications 4 à 9, **caractérisé en ce qu'**un dispositif vibrant (21) est prévu en dessous de la bande transporteuse (2).
